# EUROPEAN PATENT SPECIFICATION

(11) **EP 1 103 397 B1**
(45) Date of publication and mention of the grant of the patent: **02.07.2014**
(21) Application number: 00203973.3
(22) Date of filing: 13.11.2000
(51) Int. Cl.: B60G 17/016, B60G 17/015, B60G 21/055

(54) **Hydraulic actuator for a vehicle roll control system**
Hydraulisches Stellglied für ein Fahrzeugrollregelungssystem
Vérin hydraulique pour un système de réglage de roulis de véhicule

(30) Priority: 26.11.1999 GB 9927933; 10.03.2000 GB 0005745
(43) Date of publication of application: 30.05.2001
(73) Proprietor: BWI Company Limited S.A., 1628 Luxembourg (LU)
(72) Inventor: Oakley, Robin, 60800 Trumilly (FR); Germain, Philippe, 93100 Montreuil (FR)
(74) Representative: Fox-Male, Nicholas Vincent Humbert

(56) References cited:
- EP-A- 0 783 986
- WO-A-98/26948
- DE-A1- 4 337 765
- FR-A1- 2 767 373
- US-A- 3 147 671
- US-A- 4 892 329
- US-A- 6 089 142

## Description

### Technical Field

The present invention relates to a hydraulic actuator for a roll control system for a motor vehicle.

### Background of the Invention

Patent application nos. EP 1103396 and EP 1103395, filed the same day as the present application, describe various arrangements for vehicle roll control systems. All of these systems make use of a hydraulic actuator.

EP 0 783 986 also discloses a vehicle roll control system comprising an actuator

### Summary of the Invention

The present invention provides a system as defined in claim 1. The system may include the features of any one or more of dependent claims 2 to 6.

An aim of the present invention is to provide a hydraulic actuator which can be used in a vehicle roll control system, and which improves ride comfort.

The present invention provides a hydraulic actuator in which the fluid pressure in the second fluid chamber is maintained substantially the same as, or above, the fluid pressure in the first fluid chamber, reducing the risk of air entering the second fluid chamber.

### Brief Description of the Drawings

The present invention will now be described, by way of example, with reference to the accompanying drawings, in which:-
Figure 1 is a schematic presentation of a vehicle incorporating a vehicle roll control system having hydraulic actuators in accordance with the present invention; second embodiment of the present invention; and
Figure 2 is an enlarged view of the front and rear portions of the vehicle roll control system shown in Figure 1;
Figure 3 is a side view of the first arm of the vehicle roll control system shown in Figure 2;
Figure 4 is a side view of the second arm, hydraulic actuator (shown in cross-section) and lever arm of the vehicle roll control system shown in Figure 2;
Figure 5 is a schematic diagram of the hydraulic and electrical control circuit of the vehicle roll control system shown in Figure 1;
Figure 6 is an enlarged cross-sectional view of one of the hydraulic actuators, in accordance with the present invention, of Figures 1, 2, 4 and 5;
Figure 7 is a view of a vehicle roll control system having a hydraulic actuator in accordance with a second embodiment of the present invention; and
Figure 8 is a view of a vehicle roll control system having a hydraulic actuator in accordance with a third embodiment of the present invention.

### Description of the Preferred Embodiment

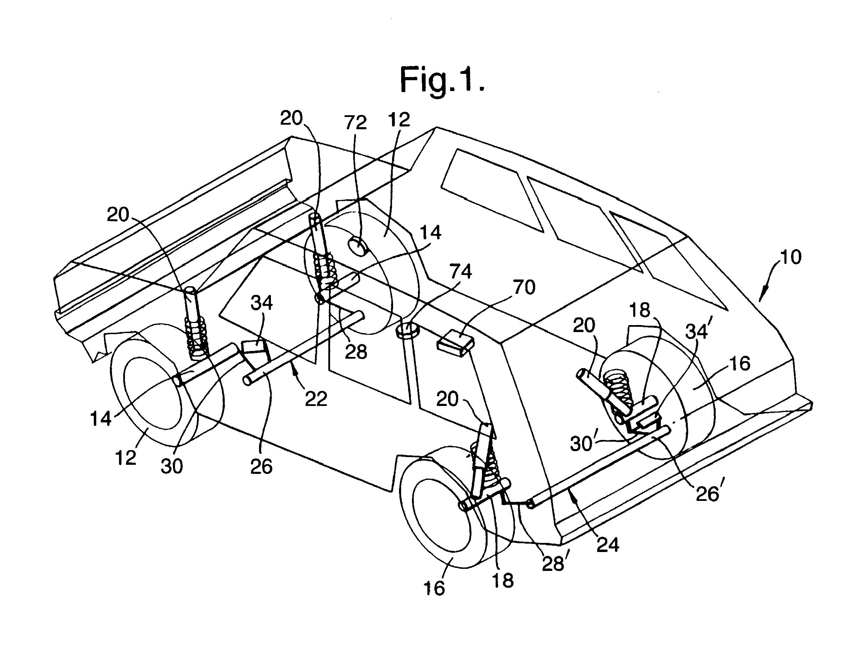

Referring to Figure 1, a vehicle 10 is shown schematically and comprises a pair of front wheels 12 each rotatably mounted on an axle 14, a pair of rear wheels 16 each rotatably mounted on an axle 18, and a shock absorbing system 20 associated with each wheel. A portion 22 of a vehicle roll control system is associated with the front wheels 12, and a portion 24 of the vehicle roll control system is associated with the rear wheels 16. The portions 22, 24 are substantially the same but with modifications made solely to allow fitting to the vehicle 10.

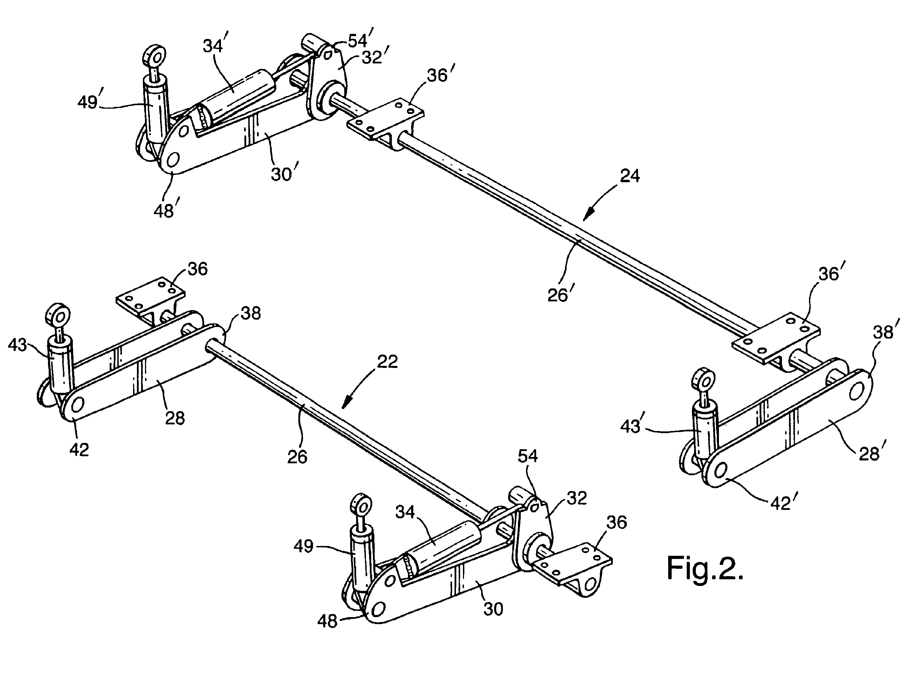

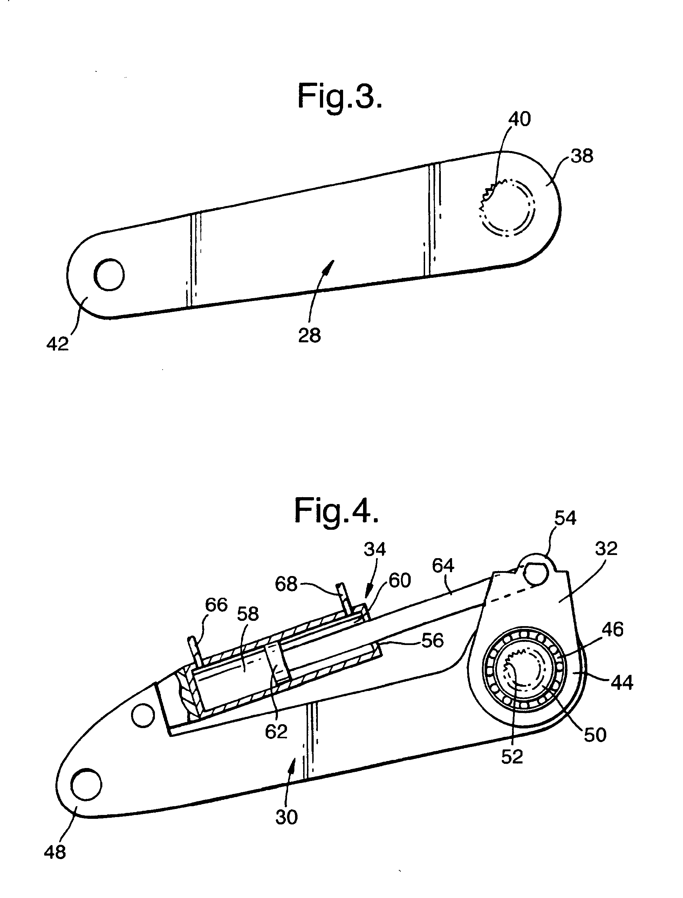

Referring in more detail to Figures 2 to 5, the portion 22 of the vehicle roll control system for the front of the vehicle comprises a torsion bar 26, a first arm 28, a second arm 30, a lever arm 32, and a hydraulic actuator 34 in accordance with the present invention. The torsion bar 26 is mounted on the vehicle by a pair of resilient mounts 36 in conventional manner to extend longitudinally between the wheels 12. The first arm 28 (Figure 3) is fixed at one end 38 by a splined connection 40 to the torsion bar 26. The other end 42 of the first arm 28 is connected to the axle 14 of one of the front wheels 12 by a tie rod 43. The second arm 30 (Figure 4) is rotatably mounted at one end 44 on the torsion bar 26 by way of a bearing 46. The other end 48 of the second arm 30 is connected to the axle 14 of the other front wheel 12 by a tie rod 49. The first and second arms 28,30 extend substantially parallel to one another when the vehicle is stationary, and substantially perpendicular to the torsion bar 26.

The lever arm 32 (Figure 4) is fixed at one end 50 to the torsion bar 26 by a splined connection 52 substantially adjacent the one end 44 of the second arm 30 and the bearing 46. The lever arm 32 extends substantially perpendicular to the torsion bar 26 to a free end 54. The hydraulic actuator 34 (Figure 4) extends between, and is connected to, the free end 54 of the lever arm 32 and the other end 48 of the second arm 30. The hydraulic actuator 34 comprises a housing 56 which defines first and second fluid chambers 58,60 separated by a piston 62 which makes a sealing sliding fit with the housing. As shown in Figure 4, the housing 56 is connected to the other end 48 of the second arm 30, and the piston 62 is connected to the free end 54 of the lever arm 34 by a piston rod 64 which extends through the second fluid chamber 60. It will be appreciated that these connections may be reversed. The fluid chambers 58,60 contain hydraulic fluid and are fluidly connected to fluid lines 66, 68 respectively. The portion 24 of the vehicle roll control for the rear of the vehicle is substantially the same, but with the components (which are primed) having a different layout.

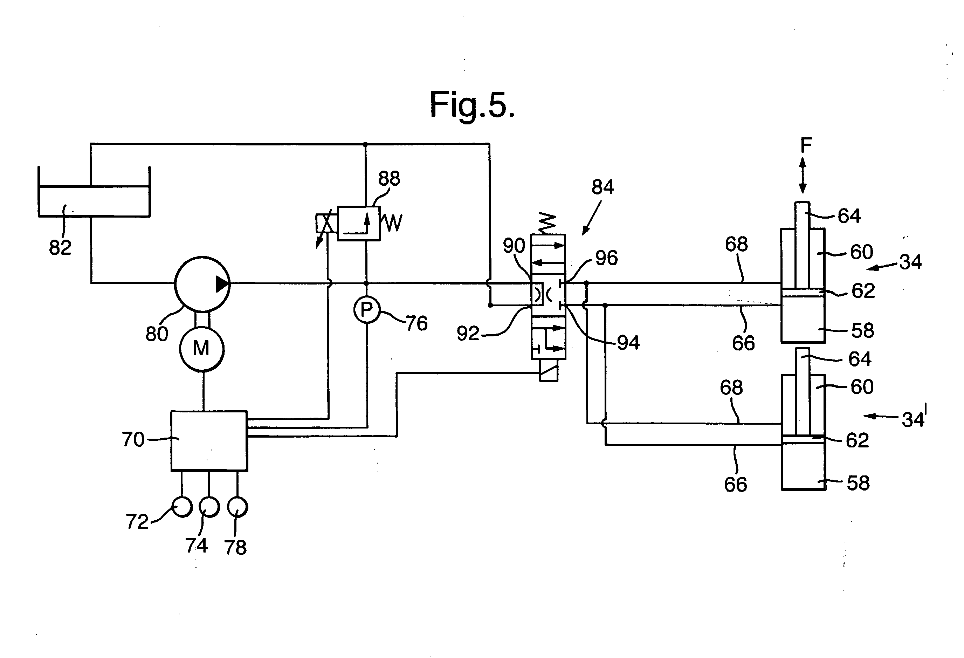

The hydraulic and electrical control circuit of the vehicle roll control system is shown in Figure 5. The hydraulic circuit includes a fluid pump 80, a fluid reservoir 82, a single directional valve 84, and a pressure control valve 88. The directional valve 84 has a first port 90 fluidly connected to the output of the pump 80, a second port 92 fluidly connected to input to the reservoir 82, a third port 94 fluidly connected to the fluid line 66 and the first fluid chamber 58 of each hydraulic actuator 34,34', and a fourth port 96 fluidly connected to the fluid line 68 and the second fluid chamber 60 of each hydraulic actuator. The directional valve 84 is solenoid actuated and has a de-energised state (shown in Figure 5) in which the first and second ports 90,92 are fluidly connected and the third and fourth ports 94, 96 are isolated from all the other ports. The directional valve 84 has a first energised or actuated state in which the first port 90 is fluidly connected with the third and fourth ports 94,96, and in which the second port 92 is closed or isolated. The directional valve 84 has a second energised or actuated state in which the first port 90 is fluidly connected with the fourth port 96 and the second port 92 is fluidly connected with the third port 94. The pressure control valve 88 is fluidly connected between the output of the pump 80 and the input of the reservoir 82. In a preferred arrangement, the pump 80 is driven by the vehicle engine and hence continuously actuated, and the pressure control valve 88 is actuated to adjust the fluid pressure in the hydraulic system between a predetermined minimum pressure and a predetermined maximum pressure. Alternatively, the pump 80 may be driven by an electric motor or any other suitable means, either continuously, or variably (in which case the pressure control valve may be omitted).

The electrical control circuit includes an electronic and/or computerised control module 70. The control module 70 operates the fluid pump 80, the directional valve 84, and the pressure control valve 88, when required. The control module 70 actuates the valves 84,88 dependent on predetermined vehicle conditions which are determined by signals from one or more sensors, such as a pressure sensor 76 (which detects the presence of fluid pressure in the hydraulic circuit), a lateral g sensor 74 (which monitors the sideways acceleration of the vehicle), a steering sensor 72 (which monitors the steering angle of the front wheels 12), a vehicle speed sensor 78, and/or any other relevant parameter.

If the control module 70 detects that roll control is not required (that is, the vehicle is travelling in a straight line), the control module actuates the pressure control valve 88 to provide the predetermined minimum pressure, and de-energises the directional valve 84. Fluid can freely flow within the hydraulic system between the pump 80 and the reservoir 82. As the directional valve 84 is closed, the actuators 34,34' are effectively locked.

If the control module 70 detects that roll control is required (due, for example, to cornering of the motor vehicle 10), the control module determines if the motion will generate a force F which acts on the piston rod 64 to extend the actuators 34,34', or to compress the actuators, in an axial direction. If the former case, the control module 70 actuates the pressure control valve 88 to provide a fluid pressure in the hydraulic system which correlates with the force F, and sets the directional valve 84 in the first actuated position, so that the same fluid pressure is generated in each of the fluid chambers 58,60 of each actuator 34,34'. If the latter case, the control module 70 actuates the pressure control valve 88 to provide a fluid pressure in the hydraulic system which correlates with the force F, and sets the directional valve 84 in the second actuated position, so that the fluid in the second fluid chamber 60 of each actuator 34,34' is pressurised, but the first fluid chamber 58 of each actuator is connected to the reservoir 82. By restricting connection of the first fluid chamber 58 of each actuator 34,34' to the reservoir 82 only during compression of the actuators, the amount of fluid flow within the hydraulic circuit is reduced during roll control. By suitable dimensions for the actuators 34,34', the output force from the actuators can be made substantially the same irrespective of the direction of motion of the piston 62.

Alternative arrangements for the hydraulic and electrical control circuit are described in the above mentioned patent applications, filed the same day as the present application and incorporated herein by reference.

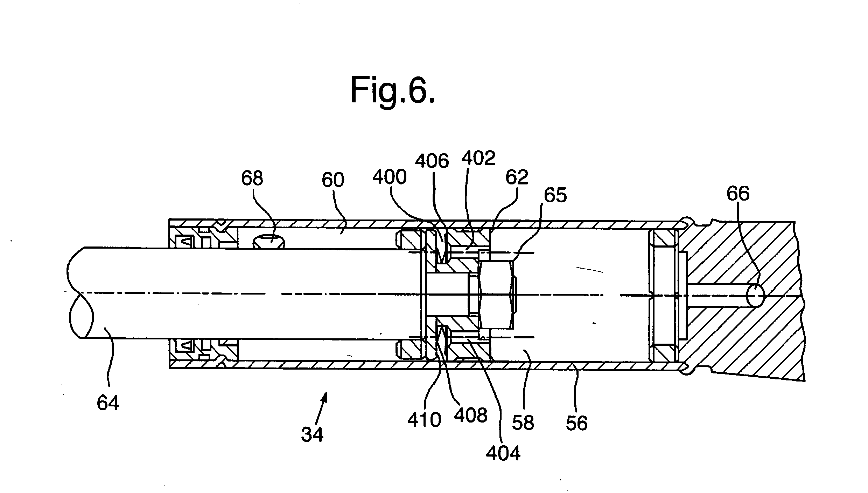

Referring to Figure 6, in accordance with the present invention, the hydraulic actuator 34 also includes a check valve system 400 mounted on the piston 62. The piston 62 is secured to the end of the piston rod 64 by a nut 65 which is located in the first fluid chamber 58. The check valve system 400 comprises one or more apertures 402 extending substantially axially through the piston 62 to provide a fluid passage 404 between the first fluid chamber 58 and the second fluid chamber 60. The fluid passage 404 is normally closed by an annular disc 406. The annular disc 406 is biased against the piston 62 by a helical spring 408, or other type of spring, which engages a shoulder 410 on the piston rod 62. The spring 408 and the annular disc 406, which define a check valve for the fluid passage 404, are therefore located in the second fluid chamber 60, on the side of the piston 62 remote from the nut 65.

In an alternative arrangement, the annular disc 406 and the spring 408 may be replaced by any other suitable type of check valve, such as a spring-biased ball. In yet another alternative arrangement, the fluid passage 404 of the check valve system 400 may be mounted on the housing 56 of the hydraulic actuator 34, rather than positioned in the piston 62, with the check valve located in the fluid passage.

As described above, during use of the roll control system, the fluid pressure in the second fluid chamber 60 is either equal to, or greater than, the fluid pressure in the first fluid chamber 58. In these circumstances, the check valve system 400 will remain closed to substantially prevent fluid flow between the first and second fluid chambers 58,60. If, exceptionally, during use, the fluid pressure in the first fluid chamber 58 becomes greater than the fluid pressure in the second fluid chamber 60, the check valve system 400 will open to allow fluid flow through the fluid passage 404 from the first fluid chamber to the second fluid chamber. This arrangement reduces the risk of air being sucked into the second fluid chamber 60 should the fluid pressure in the second fluid chamber fall below the fluid pressure in the first fluid chamber 58. Such an arrangement also enhances ride comfort. Still further, the presence of the check valve system 400 allows air to be bled from the hydraulic fluid of the hydraulic actuator 34, and the roll control system as a whole, during serving of the system. The bleeding of air can be achieved by connecting the second fluid chamber 60 to a fluid reservoir whilst the first fluid chamber 58 is being pressurised.

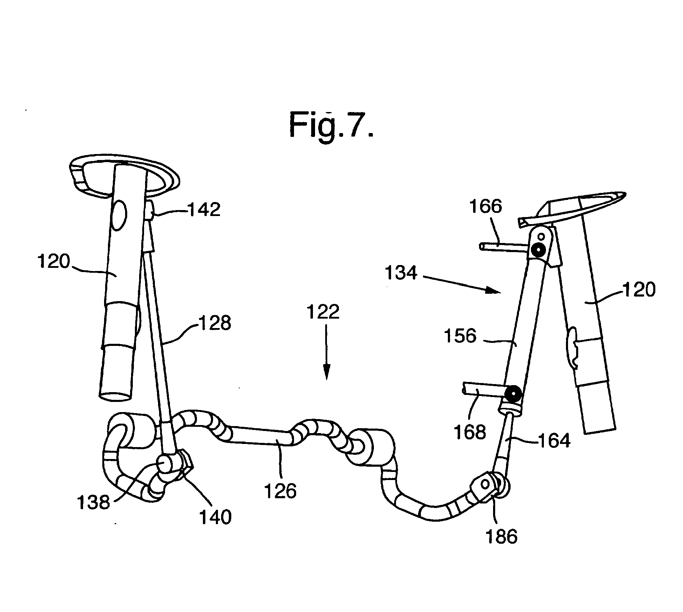

The present invention is also applicable for use with a vehicle roll control system as shown in Figure 7. In this second embodiment of hydraulic actuator 134 in accordance with the present invention, the roll control system 122 comprises a torsion bar 126, a first arm 128, and the hydraulic actuator 134. The first arm 128 is fixed at one end 138 to one end 140 of the torsion bar 126. The other end 142 of the first arm 128 is connected to one of the shock absorbers 120. The hydraulic actuator 134 has a piston rod 164 which is fixed to the other end 186 of the torsion bar 126. The housing 156 of the actuator 134 is connected to the other shock absorber 120. The hydraulic actuator 134 is substantially the same as the actuator 34 described above with reference to Figure 1 to 6, and has a fluid line 166 connected to a first fluid chamber inside the housing, and another fluid line 168 connected to a second fluid chamber inside the housing. The first and second fluid chambers inside the housing 156 are separated by a piston secured to the piston rod 164. The fluid lines 166,168 are connected to a hydraulic circuit as shown in Figure 5, which is controlled by a control circuit as shown in Figure 5. The roll control system 122 is operated in substantially the same manner as that described above with reference to Figures 1 to 6. The hydraulic actuator 134 includes a check valve system as described above with reference to Figure 6.

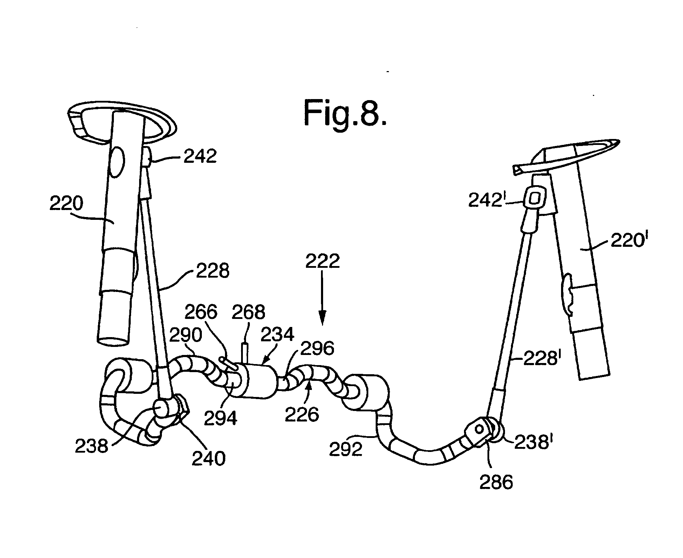

The present invention is also applicable for use with a vehicle roll control system as shown in Figure 8. In this third embodiment of hydraulic actuator 234 in accordance with the present invention, the roll control system 222 comprises a torsion bar 226, a first arm 228, a second arm 228', and the hydraulic actuator 234. The first arm 228 is fixed at one end 238 to one end 240 of the torsion bar 226. The other end 242 of the first arm 228 is connected to one of the shock absorbers 220. The second arm 228' is fixed at one end 238' to the other end 286 of the torsion bar 226. The other end 242' of the second arm 228' is connected to the other shock absorber 220'. The torsion bar 226 is split into first and second parts 290,292, respectively. The first and second parts 290,292 of the torsion bar 226 have portions 294,296, respectively, which are axially aligned. The axially aligned portions 294,296 are connected by a hydraulic actuator 234. The hydraulic actuator 234 includes a check valve system as described above with reference to Figure 6.

In the perferred arrangement, the cross-sectional area of the first fluid chamber 58 of each hydraulic actuator 34, 134, 234, described above is double the cross-sectional area of the piston rod 62 of the hydraulic actuator, when considered on a radial basis. Such an arrangement provides the same output force from the hydraulic actuator in either direction, using the same fluid pressure and equal amounts of fluid.

In the preferred arrangement described above, a hydraulic actuator is provided for both the front of the vehicle and the rear of the vehicle, and these hydraulic actuators are controlled in unison. It will be appreciated that the hydraulic actuators may be controlled individually, and in certain cases the portion of the roll control system at the rear of the vehicle may be omitted. Also, the hydraulic actuator for the front of the vehicle may be a different type to the hydraulic actuator for the rear of the vehicle.

## Claims

1. A hydraulic actuator (34) for a vehicle roll control system including a torsion bar (26); the hydraulic actuator being attachable to the torsion bar and comprising a housing (56); a piston (62) making a sealing sliding fit inside the housing to define a first fluid chamber (58) and a second fluid chamber (60); a piston rod (64) connected to the piston and extending through the second fluid chamber and out of the housing; and a check valve system (400) which allows fluid flow from the first fluid chamber to the second fluid chamber when the fluid pressure in the first fluid chamber exceeds the fluid pressure in the second fluid chamber; wherein the check valve system includes a fluid passage (404) between the first fluid chamber and the second fluid chamber, and a check valve (406, 408) which closes the fluid passage when the fluid pressure in the second fluid chamber is substantially the same as or greater than the fluid pressure in the first fluid chamber; wherein the cross-sectional area of the first fluid chamber is double the cross-sectional area of the piston rod.

2. A hydraulic actuator as claimed in Claim 1, wherein the fluid passage (404) comprises at least one aperture (402) which extends through the piston (62).

3. A hydraulic actuator as claimed in Claim 2, wherein the check valve comprises an annular disc (406) mounted on the piston (62) and biased to normally close the fluid passage (404).

4. A hydraulic actuator as claimed in Claim 3, wherein the annular disc (406) is biased by a helical spring (408).

5. A hydraulic actuator as claimed in Claim 2, wherein the check valve comprises a ball mounted on the piston (62) and biased to normally close the fluid passage (404).

6. A hydraulic actuator as claimed in Claim 1, wherein the fluid passage (404) is mounted on the housing (56) and the check valve is located in the fluid passage.

## Patentansprüche

1. Ein hydraulischer Aktuator (34) für ein Fahrzeug-Rollregelungssystem beinhaltend einen Torsionsstab (26); der hydraulische Aktuator lässt sich an dem Torsionsstab befestigen und umfasst ein Gehäuse (56); einen Kolben (62), der eine dichtende gleitende Passung innerhalb des Gehäuses herstellt, um eine erste Flüssigkeitskammer (58) und eine zweite Flüssigkeitskammer (60) zu definieren; eine mit dem Kolben verbundene und sich durch die zweite Flüssigkeitskammer und aus dem Gehäuse heraus erstreckende Kolbenstange (64); und ein Absperrventil-System (400), welches einen Flüssigkeitsfluss von der ersten Flüssigkeitskammer zu der zweiten Flüssigkeitskammer ermöglicht, wenn der Flüssigkeitsdruck in der ersten Flüssigkeitskammer den Flüssigkeitsdruck in der zweiten Flüssigkeitskammer übersteigt; wobei das Absperrventil-System einen Flüssigkeitsdurchgang (404) zwischen der ersten Flüssigkeitskammer und der zweiten Flüssigkeitskammer beinhaltet, und ein Absperrventil (406, 408), welches den Flüssigkeitsdurchgang verschließt, wenn der Flüssigkeitsdruck in der zweiten Flüssigkeitskammer im Wesentlichen übereinstimmt mit oder größer ist als der Flüssigkeitsdruck in der ersten Flüssigkeitskammer; wobei die Querschnittsfläche der ersten Flüssigkeitskammer im Wesentlichen das Doppelte der Querschnittsfläche der Kolbenstange beträgt.

2. Ein hydraulischer Aktuator gemäß Anspruch 1, wobei der Flüssigkeitsdurchgang (404) zumindest eine Öffnung (402) umfasst, die sich durch den Kolben (62) erstreckt.

3. Ein hydraulischer Aktuator gemäß Anspruch 2, wobei das Absperrventil eine ringförmige Scheibe (406) umfasst, die an dem Kolben (62) angebracht und vorgespannt ist um normalerweise den Flüssigkeitsdurchgang (404) zu verschließen.

4. Ein hydraulischer Aktuator gemäß Anspruch 3, wobei die ringförmige Scheibe (406) durch eine Schraubenfeder (408) vorgespannt ist.

5. Ein hydraulischer Aktuator gemäß Anspruch 2, wobei das Absperrventil einen Ball umfasst, der an dem Kolben (62) angebracht und vorgespannt ist um normalerweise den Flüssigkeitsdurchgang (404) zu verschließen.

6. Ein hydraulischer Aktuator gemäß Anspruch 1, wobei der Flüssigkeitsdurchgang (404) an dem Gehäuse (56) angebracht ist und das Absperrventil sich in dem Flüssigkeitsdurchgang befindet.

## Revendications

1. Actionneur hydraulique (34) pour un système de réglage de roulis de véhicule comportant une barre de torsion (26), l'actionneur hydraulique étant fixable à la barre de torsion et comprenant un boîtier (56), un piston (62) assurant un siège coulissant étanchéifiant à l'intérieur du boîtier pour définir une première chambre de fluide (58) et une seconde chambre de fluide (60), une tige de piston (64) reliée au piston et s'étendant à travers la seconde chambre de fluide et hors du boîtier, et un système de clapet d'arrêt (400) qui permet au fluide de s'écouler depuis la première chambre de fluide à la seconde chambre de fluide lorsque la pression du fluide dans la première chambre excède la pression du fluide dans la seconde chambre de fluide, le système de clapet d'arrêt comportant un passage pour le fluide (404) entre la première chambre de fluide et la seconde chambre de fluide et un clapet d'arrêt (406, 408) qui ferme le passage pour le fluide lorsque la pression du fluide dans la seconde chambre de fluide est essentiellement identique ou supérieure à la pression de fluide dans la première chambre de fluide, l'aire de la section de la première chambre de fluide correspondant au double de la section de la tige de piston.

2. Actionneur hydraulique suivant la revendication 1, dans lequel le passage pour le fluide (404) comprend au moins une ouverture (402) qui s'étend à travers le piston (62).

3. Actionneur hydraulique suivant la revendication 1, dans lequel le clapet d'arrêt (404) comprend un disque annulaire (406) monté sur le piston (62) et précontraint pour fermer normalement le passage pour le fluide (404).

4. Actionneur hydraulique suivant la revendication 3, dans lequel le disque annulaire (406) est précontraint par un ressort hélicoïdal.

5. Actionneur hydraulique suivant la revendication 2, dans lequel le clapet d'arrêt comprend une bille montée sur le piston (62) et précontrainte pour fermer normalement le passage pour le fluide (404).

6. Actionneur hydraulique suivant la revendication 1, dans lequel le passage pour le fluide (404) est monté sur le boîtier (56) et le clapet d'arrêt est situé dans le passage pour le fluide.
